# EUROPÄISCHE PATENTSCHRIFT

(11) **EP 2 227 403 B1**
(45) Veröffentlichungstag und Bekanntmachung des Hinweises auf die Patenterteilung: **20.04.2016**
(21) Anmeldenummer: 08853117.3
(22) Anmeldetag: 21.11.2008
(51) Int. Cl.: B60N 2/48

(54) **VERRIEGELUNGSEINRICHTUNG, INSBESONDERE FÜR EINE CRASHAKTIVE KOPFSTÜTZE EINES FAHRZEUGS**
LOCKING DEVICE, IN PARTICULAR FOR A CRASH-ACTIVE HEAD RESTRAINT OF A VEHICLE
DISPOSITIF DE VERROUILLAGE, NOTAMMENT POUR UN APPUIE-TÊTE ANTI-CRASH ACTIF D'UN VÉHICULE

(30) Priorität: 23.11.2007 DE 102007056810; 03.03.2008 DE 102008012217
(43) Veröffentlichungstag der Anmeldung: 15.09.2010
(73) Patentinhaber: Johnson Controls GmbH, 51399 Burscheid (DE)
(72) Erfinder: SCHMITZ, Andreas, 51399 Burscheid (DE)
(74) Vertreter: Schwöbel, Thilo K.
(86) Internationale Anmeldenummer: PCT/EP2008/009896
(87) Internationale Veröffentlichungsnummer: WO 2009/065603

(56) Entgegenhaltungen:
- EP-A2- 2 188 149
- WO-A-2009/030414
- DE-B3-102004 016 474

## Beschreibung

Die Erfindung betrifft eine Verriegelungseinrichtung zur lösbaren Verriegelung eines Bauteils relativ zu einem anderen in einer von mehreren möglichen Relativstellungen, insbesondere für eine crashaktive Kopfstütze eines Fahrzeugs.

Eine solche Verriegelung kann im Stand der Technik durch eine Verzahnung erfolgen, in welche ein Riegel an verschiedenen Positionen formschlüssig einrastet. Derartige Riegel werden üblicherweise unter Federkraft in Richtung der Verzahnung gespannt. Beim Verstellen kann der Riegel entgegen der Federkraft angehoben werden, so dass die Verriegelung gelöst wird und eine Verstellung der Relativposition erfolgen kann. Gegebenenfalls kann die Verstellung auch ohne Anheben des Riegels vorgenommen werden, sofern die Neigung der Zahnflanken entsprechend flach ist. Darüber hinaus können Riegel und Verzahnung derart asymmetrisch ausgeführt werden, dass eine Verstellung in einer Richtung auch bei ungelöstem Riegel möglich ist, während eine Verstellung in Gegenrichtung ein Lösen des Riegels erfordert. Insbesondere (aber nicht nur) bei den letztgenannten Verriegelungseinrichtungen kann beim Verstellen ohne vorhergehendes Lösen des Riegels ein ratschendes Geräusch entstehen, welches störend wirkt, Darüber hinaus kann hierdurch ein erhöhter Verschleiß an Riegel und Verzahnung auftreten. Aus der Druckschrift DE 199 23 909 A1 ist weiterhin eine Kopfstütze bekannt, die aus einem mit der Rückenlehne des Fahrzeugsitzes über Haltestangen starr, gegebenenfalls auch höhenverstellbar verbundenen Grundkörper besteht, der in einem wannenartig ausgebildeten Polstersegment angeordnet ist. Bei einem Unfall wird das Polstersegment translatorisch zum Kopf des Sitzinsassen hin bewegt, um einem Schleudertrauma vorzubeugen. Die hierzu erforderliche Kraft wird durch eine in Verlagerungsrichtung vorgespannte Feder innerhalb einer teleskopartigen Führungseinrichtung erzeugt. Kopfstützen sind ferner aus den Druckschriften DE 103 48 939 B3 und DE 10 2005 052 766 B3 bekannt. DE 10 2004 016 474 B3 offenbart eine gattungsgemässe Kopfstütze für einen Fahrzeugsitz, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin in eine Sicherheitsstellung verlagerbar ist. EP 2 188 149 A2 offenbart eine Kopfstütze für einen Fahrzeugsitz, bei welcher zumindest ein dem Kopf des Sitzinsassen zugewandtes erstes Teilstück der Kopfstütze unfallbedingt unter der Wirkung einer Relativbewegung eines im Wesentlichen zwischen dem ersten Teilstück und einem dritten Teilstück angeordneten zweiten Teilstücks der Kopfstütze aus einer Gebrauchsstellung zum Kopf des Sitzinsassen hin entlang einer Verlagerungsrichtung in eine Sicherheitsstellung verlagerbar ist.

Der Erfindung liegt die Aufgabe zugrunde, eine Verriegelungseinrichtung, insbesondere für eine Kopfstütze für einen Fahrzeugsitz bereitzustellen, wobei die zuvor genannten Nachteile vermieden werden. Insbesondere soll in einer normalen Benutzungssituation eine optimale Bedienbarkeit gewährleistet sein und eine Geräuschgenerierung bei der Verstellung der Kopfstütze vermieden oder verringert werden und gegebenenfalls in einer Unfallsituation eine optimale Sicherheit für einen Sitzinsassen gewährleistet werden.

Die Aufgabe wird mit einer Verriegelungseinrichtung, insbesondere für eine Kopfstütze für einen Fahrzeugsitz, gelöst, wobei die Verriegelungseinrichtung ein erstes Teilstück aufweist, welches aus einer Gebrauchsstellung entlang einer Verlagerungsrichtung in eine Komfortstellung verlagerbar ist, wobei eine Relativbewegung eines zweiten Teilstücks gegenüber dem ersten Teilstück und/oder gegenüber einem dritten Teilstück um eine zur Verlagerungsrichtung im wesentlichen parallele Drehachse vorgesehen ist, wobei ferner zwischen dem ersten Teilstück und dem zweiten Teilstück und/oder zwischen dem zweiten Teilstück und dem dritten Teilstück sowohl eine Blockiereinrichtung als auch eine Gleiteinrichtung angeordnet ist, wobei die Blockiereinrichtung zur Blockierung einer Bewegung des ersten Teilstücks entgegen der Verlagerungsri vorgesehen ist, wobei die Blockiereinrichtung eine Verzahnung im Bereich einer ersten Schrägfläche des ersten Teilstücks und einer zweiten Schrägfläche des zweiten Teilstücks und/oder eine Verzahnung im Bereich einer dritten Schrägfläche des dritten Teilstücks und einer vierten Schrägfläche des zweiten Teilstücks aufweist, wobei die Blockiereinrichtung wenigstens einen Blockierstift aufweist, wobei der Blockierstift im Normalfall federvorbelastet vorgesehen ist, wobei der Blockierstift Zähne aufweist, die formschlüssig in die Verzahnung einsetzbar sind, wobei ..--..im Zustand ohne benutzerseitige Kraftwirkung auf das erste Teilstück lediglich die Wirkung der Gleiteinrichtung vorgesehen ist, wobei der Blockierstift im Normalfall nicht im Zahneingriff, sondern lediglich im Reibschluss mit der vierten Schrägfläche vorgesehen ist, wobei die Verriegelungseinrichtung eine Feder aufweist, wobei die Feder dazu ausgebildet ist, mittels einer Übertragungseinrichtung die Relativbewegung im Sinne einer Entriegelung des Blockierstifts zu bewirken, wobei eine Kraftschwelle vorgesehen ist und wobei bei Ausübung einer auf das erste Teilstück entgegen der Verlagerungsrichtung wirkenden ersten Kraft oberhalb der Kraftschwelle die Wirkung der Blockiereinrichtung vorgesehen ist, wobei es bei einer über der Kraftschwelle liegenden ersten Kraft auf das erste Teilstück in eine Richtung entgegen der Verlagerungsrichtung die Verzahnungen der Blockiereinrichtung durch Zahneingriff blockiert vorgesehen sind, oder ..--.. im Zustand ohne benutzerseitige Kraftwirkung auf das erste Teilstück mindestens die Wirkung der Blockiereinrichtung vorgesehen ist, wobei die Verriegelungseinrichtung eine Feder derart aufweist, dass eine Kraftschwelle vorgesehen ist und dass bei Ausübung einer auf das erste Teilstück parallel zur Verlagerungsrichtung wirkenden zweiten Kraft oberhalb der Kraftschwelle die Wirkung der Blockiereinrichtung aufgehoben vorgesehen ist, wobei bei Ausübung einer auf das erste Teilstück parallel zur Verlagerungsrichtung wirkenden zweiten Kraft oberhalb der Kraftschwelle der Blockierstift betätigt vorgesehen ist.

Hierdurch wird in vorteilhafter Weise ein robuster und zuverlässiger Mechanismus realisierbar, der zur Komfortverstellung und/oder zur Sicherheitsverstellung der Kopfstütze bzw. des ersten Teilstücks der Kopfstütze vorgesehen ist und der bei einer Verstellung keine oder lediglich eine geringe Geräuschentwicklung aufweist. Ferner ist es dadurch vorteilhaft möglich, dass die Verriegelungseinrichtung sowohl vorwiegend formschlüssige als auch vorwiegend reibschlüssige Sperrmittel aufweist, wobei beispielsweise die Sperrung unter Grundlast oder einer niedrigeren Betriebslast vorwiegend reibschlüssig und bei einer erhöhten Betriebslast vorwiegend formschlüssig erfolgt. Dabei sind die unter Grundlast oder einer niedrigeren Betriebslast vorwiegend reibschlüssigen Sperrmittel insbesondere kompressibel, vorzugsweise elastisch-kompressibel, ausgebildet und bei einer auf die Bauteile wirkenden Betriebslast derart verformbar, dass die vorwiegend formschlüssigen Sperrmittel in Eingriff geraten. Eine derartige Verriegelungseinrichtung ist mit besonderem Vorteil bei der Komfort-Tiefenverstellung einer crashaktiven Kopfstütze einsetzbar, die in der deutschen Patentanmeldung DE 10 2007 041 498.8 beschrieben wird. Auf die gesamte dortige Offenbarung und insbesondere die Beschreibung der verzahnten Schrägflächen (letzter Absatz der Beschreibung) wird ausdrücklich verwiesen.

Erfindungsgemäß ist es besonders bevorzugt, dass im Zustand ohne benutzerseitige Kraftwirkung auf das erste Teilstück lediglich die Wirkung der Gleiteinrichtung vorgesehen ist, wobei die Verriegelungseinrichtung eine Feder derart aufweist, dass eine Kraftschwelle vorgesehen ist und dass bei Ausübung einer auf das erste Teilstück entgegen der Verlagerungsrichtung wirkenden ersten Kraft oberhalb der Kraftschwelle die Wirkung der Blockiereinrichtung vorgesehen ist. Gemäß dieser Alternative wirkt im Normalfall, d.h. ohne wesentliche benutzerseitige Kraftwirkungen auf das erste Teilstück, die Gleiteinrichtung, so dass in vorteilhafter Weise eine geräuschreduzierte Verstellung möglich ist. Ferner ist es erfindungsgemäß alternativ dazu besonders bevorzugt, dass im Zustand ohne benutzerseitige Kraftwirkung auf das erste Teilstück mindestens die Wirkung der Blockiereinrichtung vorgesehen ist, wobei die Verriegelungseinrichtung eine Feder derart aufweist, dass eine Kraftschwelle vorgesehen ist und dass bei Ausübung einer auf das erste Teilstück parallel zur Verlagerungsrichtung wirkenden zweiten Kraft oberhalb der Kraftschwelle die Wirkung der Blockiereinrichtung aufgehoben vorgesehen ist. Gemäß dieser Alternative wirkt im Normalfall, d.h. ohne wesentliche benutzerseitige Kraftwirkungen auf das erste Teilstück, zumindest auch die Blockiereinrichtung, so dass in vorteilhafter Weise eine sichere Positionierung des ersten Teilstücks gewährleistet ist und lediglich beim benutzerinduzierten Ziehen an dem ersten Teilstück (in Verlagerungsrichtung nach vorne) mit der zweiten Kraft die Wirkung der Blockiereinrichtung nicht vorliegt.

Weiterhin ist es erfindungsgemäß bevorzugt, dass die ersten und/oder zweiten Schrägflächen im wesentlichen helixförmig um die Drehachse verlaufen und bei einer Relativbewegung des zweiten Teilstücks um die Drehachse eine Bewegung des ersten Teilstücks entlang der Verlagerungsrichtung bewirken, bzw. dass das zweite Teilstück zwischen dem ersten Teilstück und einem dritten Teilstück angeordnet vorgesehen ist, , wobei die dritten und/oder vierten Schrägflächen im wesentlichen helixförmig um die Drehachse verlaufen und bei einer Relativbewegung des zweiten Teilstücks um die Drehachse eine Bewegung des zweiten Teilstücks entlang der Verlagerungsrichtung bewirken. Hierdurch wird erfindungsgemäß in einfacher Weise eine Entsprechung der linearen Bewegung des ersten Teilstücks und der relativen Drehbewegung des zweiten Teilstücks realisiert.

Weiterhin ist es erfindungsgemäß bevorzugt, dass die Blockiereinrichtung und die Gleiteinrichtung entlang der ersten Schrägfläche und/oder entlang der zweiten Schrägfläche und/oder entlang der dritten Schrägfläche und/oder entlang der vierten Schrägfläche im wesentlichen nebeneinander verlaufend vorgesehen sind, insbesondere entlang eines Umfangs um die Drehachse nebeneinander verlaufend vorgesehen sind und insbesondere in bezüglich der Drehachse axialer Richtung versetzt vorgesehen sind. Hierdurch kann die Blockiereinrichtung und die Gleiteinrichtung in besonders bauraumkompakter Weise realisiert werden.

Weiterhin ist erfindungsgemäß auch bevorzugt, dass die Feder im Bereich der ersten Schrägfläche und/oder im Bereich der zweiten Schrägfläche und/oder im Bereich der dritten Schrägfläche und/oder im Bereich der vierten Schrägfläche auf der der Blockiereinrichtung in axialer Richtung gegenüberliegenden Seite vorgesehen ist. Hierdurch ist es erfindungsgemäß in einfacher Weise möglich, die Bauteiltoleranzen zur Umschaltung der Wirkung der Blockiereinrichtung heranzuziehen.

Dadurch, dass die Blockiereinrichtung zur Blockierung oder Verringerung einer Bewegung des ersten Teilstücks entgegen der Verlagerungsrichtung vorgesehen ist, wobei die Blockiereinrichtung eine Verzahnung im Bereich der dritten Schrägfläche und der vierten Schrägfläche und/oder eine Verzahnung im Bereich der ersten Schrägfläche und der zweiten Schrägfläche aufweist, kann in vorteilhafter Weise eine besonders einfache Blockierung durch einen Formschluss zwischen zwei Verzahnungen realisiert werden.

Dadurch, dass die Blockiereinrichtung wenigstens einen Blockierstift aufweist, wobei insbesondere der Blockierstift im Normalfall federvorbelastet vorgesehen ist und/oder wobei bei Ausübung einer auf das erste Teilstück parallel zur Verlagerungsrichtung wirkenden zweiten Kraft oberhalb der Kraftschwelle insbesondere der Blockierstift betätigt vorgesehen ist, ist es mit einfachen Mitteln möglich, mittels eines vergleichsweise geringen Verstellweges des ersten Teilstücks parallel zur Verlagerungsrichtung (d.h. nach vorne) eine große Abstandsvergrößerung der miteinander in Eingriff befindlichen Verzahnungen der Blockiereinrichtung zu realisieren. Hierdurch wird die Bedienung einer erfindungsgemäßen Kopfstütze vereinfacht und komfortabler gestaltet.

Ferner ist erfindungsgemäß bevorzugt, dass das zweite Teilstück ein Komfortteilstück und ein Sicherheitsteilstück aufweist, wobei das Komfortteilstück zur Komfortverstellung ausgehend von einer der Gebrauchsstellung des ersten Teilstücks entsprechenden Position von der Position des Sicherheitsteilstücks entfernbar ist, wobei insbesondere das Komfortteilstück zur Komfortverstellung bis in eine der Sicherheitsstellung des ersten Teilstücks entsprechenden Position unabhängig von der Position des Sicherheitsteilstücks verstellbar ist. Hierdurch wird in einfacher Weise ein robuster und zuverlässiger Mechanismus sowohl zur Komfortverstellung als auch zur Sicherheitsverstellung der Kopfstütze bzw. des ersten Teilstücks der Kopfstütze bereitgestellt.

Weiterhin ist es erfindungsgemäß bevorzugt vorgesehen, dass zwischen dem ersten Teilstück und dem zweiten Teilstück und/oder zwischen dem zweiten Teilstück und dem dritten Teilstück und/oder zwischen dem ersten Teilstück und dem dritten Teilstück eine Toleranzausgleichseinrichtung vorgesehen ist. Hierdurch ist es mit einfachen Mitteln vorteilhaft möglich, einen Toleranzausgleich und ggf. auch einen Anschlagschutz mit einer entsprechenden Geräuschreduzierung zu realisieren.

Eine alternative Ausführungsform umfasst eine Kopfstütze für einen Fahrzeugsitz mit einer erfindungsgemäßen Verriegelungseinrichtung, wobei das erste Teilstück dem Kopf des Sitzinsassen zugewandt ist und dass die Verlagerungsrichtung in Richtung zum Kopf des Sitzinsassen hin vorgesehen ist.

Eine weitere alternative Ausführungsform umfasst eine Verriegelungseinrichtung, insbesondere für eine Kopfstütze für einen Fahrzeugsitz, wobei ein fünftes Teilstück von einer Normalstellung in eine Sicherheitsstellung einstellbar ist, wobei ein um eine im Wesentlichen horizontale Drehachse relativ zu dem fünften Teilstück drehbares viertes Teilstück vorgesehen ist, welches zu Komfortzwecken zwischen einer Ausgangsstellung und einer Endstellung verlagerbar ist, wobei ein Klemmelement und ein Gegenelement vorgesehen ist, um das vierte Teilstück in jeder beliebigen Position zwischen der Ausgangsstellung und der Endstellung gegenüber einer Bewegung in Richtung zur Ausgangsstellung hin zu arretieren. Hierdurch ist es erfindungsgemäß in besonders vorteilhafter Weise möglich, dass eine Komfortverstellung ohne Rastpositionen, d.h. im Wesentlichen kontinuierlich, möglich ist.

Ausführungsformen der Erfindung sind in der Zeichnung dargestellt und in der nachfolgenden Beschreibung näher erläutert.

Figuren 1 bis 14 zeigen verschiedene Ausführungsformen bzw. Details der erfindungsgemäßen Verriegelungseinrichtung bzw. von bekannten Verriegelungsvorrichtungen.

Figur 15 zeigt einen Fahrzeugsitz mit einer Kopfstütze.

Figuren 16 und 17 zeigen schematisch Detailansichten und eine Explosionsdarstellung der Kopfstütze.

Figuren 18 und 19 zeigen weitere Abwandlungen der erfindungsgemäßen Verriegelungseinrichtung 1.

Figuren 20 bis 26 zeigen weitere Details einer erfindungsgemäßen Kopfstütze mit einem zu Komfortzwecken kontinuierlich einstellbaren Element bzw. Teilstück.

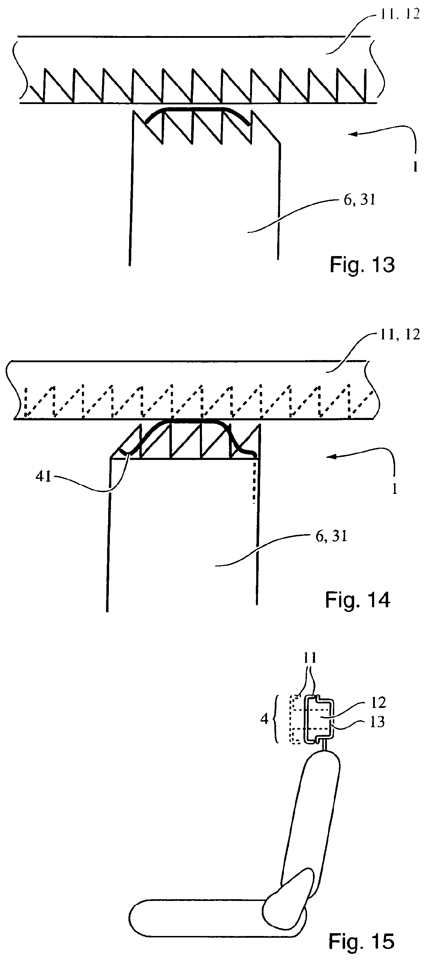

Gemäß der Figur 15 umfasst ein Fahrzeugsitz bzw. ein mit einer erfindungsgemäßen Kopfstütze 4 ausgestatteter Fahrzeugsitz ein Sitzteil 2 und eine mit diesem insbesondere neigungsverstellbar verbundene Rückenlehne 3, welche mit der Kopfstütze 4 ausgestattet ist. Paarige Haltestangen 5 können zur Befestigung der Kopfstütze an der Rückenlehne 3 vorgesehen sein. Es können jedoch auch alternativ andere Befestigungsmöglichkeiten (nicht dargestellt) zwischen der Rückenlehne 3 und der Kopfstütze 4 vorgesehen sein. Die paarigen Haltestangen 5 der Kopfstütze 4 können im oberen Bereich der Rückenlehne 3 oder im Bereich der Kopfstütze 4 über ein Gelenk (nicht dargestellt) mit der Rückenlehne 3 bzw. mit der Kopfstütze 4 schwenkbar verbunden sein. Die Kopfstütze 4 weist erfindungsgemäß wenigstens ein dem Kopf des Sitzinsassen zugewandtes erstes Teilstück 11 der Kopfstütze 4 auf, das gemäß einer bevorzugten Ausführungsform unfallbedingt unter der Wirkung einer Relativbewegung eines im wesentlichen zwischen dem ersten Teilstück 11 und einem dritten Teilstück 13 angeordneten zweiten Teilstücks 12 der Kopfstütze 4 aus einer Gebrauchsstellung (mit durchgezogener Linie in Figur 15 gezeichnet) zum Kopf des Sitzinsassen hin entlang einer Verlagerungsrichtung in eine Sicherheitsstellung (mit gestrichelter Linie in Figur 15 gezeichnet) verlagerbar ist. Eine entsprechende Verlagerung des ersten Teilstücks 11 ist gemäß der vorliegenden Erfindung durch eine Komforteinstellungsmöglichkeit gegeben. Bei dem ersten Teilstück 11 handelt es sich insbesondere um ein Polsterelement, an welches der Kopf des Sitzinsassen angelegt bzw. abgestützt werden kann. Bei dem dritten Teilstück 13 der Kopfstütze 4 handelt es sich insbesondere um einen Grundkörper der Kopfstütze 4, der über die Haltestangen 5 starr oder auch höhen und/oder neigungsverstellbar mit der Rückenlehne 3 verbunden ist.

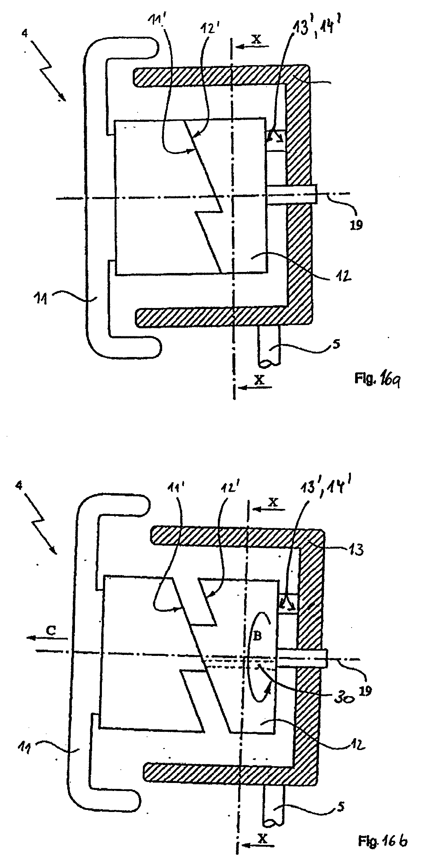

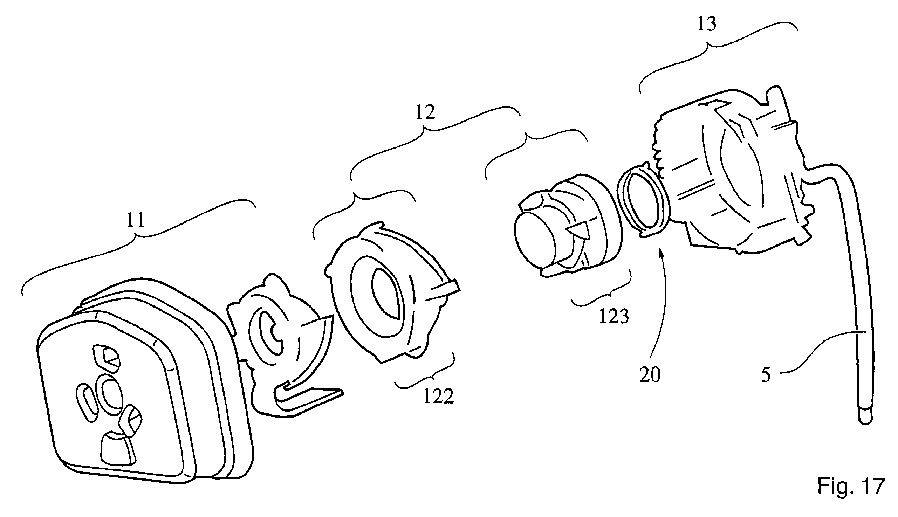

Gemäß der Figuren 16a und 16b ist die Relativbewegung der Teilstücke 11, 12, 13 der erfindungsgemäßen Kopfstütze 4 in schematischer Weise näher dargestellt. Hierbei zeigt die Figur 16a den Zustand der Kopfstütze in der Gebrauchsstellung und die Figur 16b den Zustand der Kopfstütze in der Sicherheitsstellung bzw. in der Komfortstellung, d.h. nach einer Vorverlagerung (gemäß des Pfeils C) des ersten Teilstücks 11 in Richtung auf den Sitzinsassen zu. Diese Vorverlagerung wird durch eine Relativdrehung des zweiten Teilstücks 12 um eine Drehachse 19 bewirkt. Aufeinander reibende bzw. gelagerte Schrägflächen zwischen dem ersten Teilstück 11 und dem zweiten Teilstück 12 und/oder zwischen dem zweiten Teilstück 12 und dem dritten Teilstück 13 bewirken eine axiale Kraft und eine Vorverlagerung des ersten Teilstücks 11 parallel zur Richtung der Drehachse 19 in Richtung der Verlagerungsrichtung C. Die mit 11' bzw. 12' bezeichneten und zueinander weisenden Stirnflächen des ersten Teilstücks 11 (nachfolgend auch als erste Schrägflächen 11' bezeichnet) bzw. des zweiten Teilstücks 12 (nachfolgend auch als zweite Schrägflächen 12' bezeichnet) sind erfindungsgemäß als Schrägflächen derart ausgebildet, dass die rotative Bewegung des zweiten Teilstücks 12 in eine translative Bewegung des ersten Teilstücks 11 übersetzt wird und umgekehrt. Eine Blockiereinrichtung 30 (lediglich in Figur 16b schematisch angedeutet) kann erfindungsgemäß derart vorgesehen sein, dass ein Teil oder alle dieser ersten und zweiten Schrägflächen 11', 12' mit - beispielsweise sägezahnartigen - Verzahnungen ausgestattet sind, die eine Blockierung des ersten Teilstücks 11 in seiner ganz oder teilweise gemäß der Bewegungsrichtung C ausgefahrenen Lage ermöglichen, wenn auf das erste Teilstück 11 eine dieses in die Gebrauchsstellung zurückbewegende Kraft (beispielsweise nach oder während eines Unfalls ausgehend von dem Kopf des Fahrzeuginsassen) wirkt. Dritte und vierte Schrägflächen (in den Figuren 16a und 16b lediglich schematisch angedeutet) können (alternativ oder kumulativ zu ihrer Anordnung zwischen dem ersten Teilstück 11 und dem zweiten Teilstück 12) auch zwischen dem zweiten Teilstück 12 und dem dritten Teilstück 13 vorgesehen sein. Entsprechend kann alternativ oder kumulativ zu der Blockiereinrichtung 30 im Bereich der ersten und zweiten Schrägflächen 11', 12' eine ähnlich aufgebaute Blockiereinrichtung im Bereich der dritten und vierten Schrägflächen 13', 14' vorgesehen sein. Gemäß der vorliegenden Erfindung ist es vorgesehen, dass die Verlagerung des ersten Teilstücks 11 in Verlagerungsrichtung C in einer Unfallsituation und/oder für Komfortzwecke möglich ist. In einem in Figur 17 dargestellten Ausführungsbeispiel überlappen sich der Verlagerungsweg in Verlagerungsrichtung für Komfortzwecke und der Verlagerungsweg zur Einstellung der Sicherheitsstellung vollständig. Dies ist kann erfindungsgemäß beispielsweise derart realisiert sein, dass das zweite Teilstück 12 ein Komfortteilstück 122 und ein Sicherheitsteilstück 123 aufweist, wobei mittels einer Drehung des Komfortteilstücks 122 um die Drehachse 19 ausgehend von der Gebrauchsstellung oder ausgehend von einer Komfortstellung eine Bewegung des ersten Teilstücks 11 entlang der Verlagerungsrichtung C vorgesehen ist und wobei mittels einer Drehung des Sicherheitsteilstücks 123 um die Drehachse 19 eine zumindest teilweise Mitbewegung des Komfortteilstücks und eine Bewegung des ersten Teilstücks 11 entlang der Verlagerungsrichtung C vorgesehen ist. Der einfacheren Darstellung wegen ist das Komfortteilstück 122 und das Sicherheitsteilstück 123 lediglich in der Explosionsdarstellung gemäß der Figur 17, in den Figuren 16a und 16b jedoch nicht dargestellt.

Entlang der Verlagerungsrichtung C gesehen, können die Schrägflächen 11', 12', 13', 14', zumindest teilweise helixförmig ausgebildet sein. Die Schrägflächen können ferner beispielsweise dreifach entlang eines Umfangs beispielsweise des Komfortteilstücks 122 ausgelegt sein, so dass sich eine maximale Verdrehung des Komfortteilstücks 122 von bis zu 120° ergibt, in der Regel von ca. 70° bis ca. 110°.

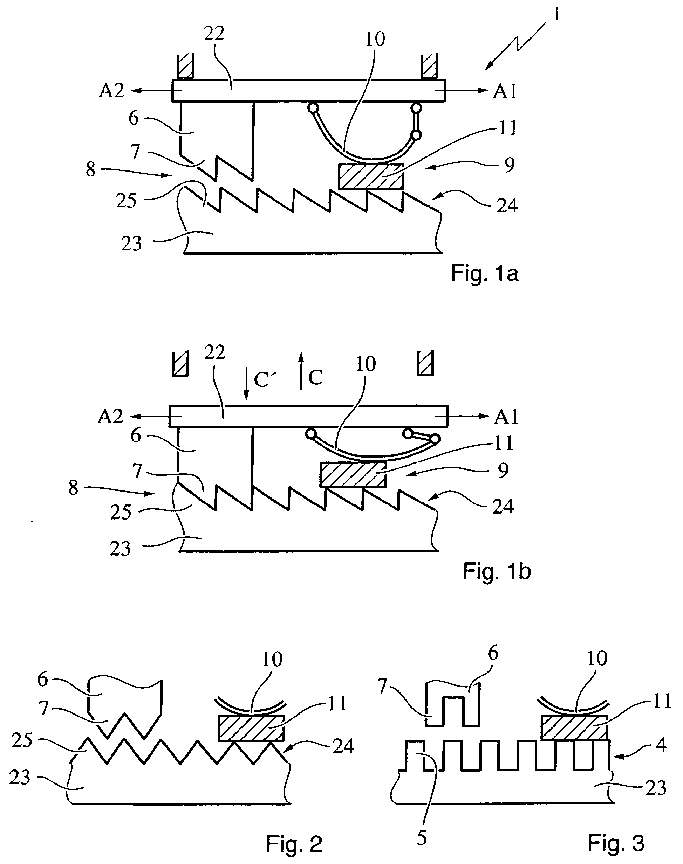

Erfindungsgemäß ist eine Bewegung des ersten Teilstücks 11 entgegen der Verlagerungsrichtung C (d.h. vom Kopf des Insassen weg bzw. nach hinten) nicht uneingeschränkt möglich, sondern wird blockiert. Hierzu ist die erfindungsgemäße Verriegelungseinrichtung 1 vorgesehen bzw. weist die Kopfstütze 4 erfindungsgemäß eine solche Verriegelungseinrichtung 1 auf. Die Verriegelungseinrichtung 1 weist die Blockiereinrichtung 30 auf, die eine über einen Totgang hinausgehende entgegengesetzte Bewegung entgegen der Verlagerungsrichtung C des ersten Teilstücks 11 verhindert. Erfindungsgemäß soll bei der Verriegelungseinrichtung 1 jedoch ein übermäßiges Geräusch bei der Komfortverstellung durch die Verzahnung der Blockiereinrichtung 30 verhindert werden. Die Blockiereinrichtung 30 ist erfindungsgemäß beispielsweise in Form einer Verzahnung im Bereich der dritten und vierten Schrägflächen 13', 14' und/oder im Bereich der ersten und zweiten Schrägflächen 11', 12' vorgesehen. Hierzu ist zumindest eine Paarung aus helixförmiger Schrägfläche und nicht helixförmiger Schrägfläche gezahnt vorgesehen, d.h. von beispielsweise drei über den Umfang verteilten Schrägflächen ist lediglich eine gezahnt vorgesehen. Im Ausführungsbeispiel ist ferner vorgesehen, dass die gezahnte Fläche beispielsweise der dritten Schrägfläche 13' beispielsweise mittels eines ggf. federvorbelasteten Blockierstifts 31 von dem im Normalfall vorgesehenen Zahneingriff mit der vierten Schrägfläche 14' abgehoben werden kann (wodurch die Blockierwirkung der Blockiereinrichtung 30 aufgehoben werden kann) oder aber der Blockierstift 31 im Normalfall (d.h. bei vergleichsweise geringen Kräften auf das erste Teilstück 11) nicht im Zahneingriff, sondern lediglich im Reibschluss mit der vierten Schrägfläche 14' vorgesehen ist (so dass es bei stärkeren, d.h. über einer Kraftschwelle liegenden Kräften auf das erste Teilstück 11 in einer Richtung entgegen der Verlagerungsrichtung C zu einer Blockierung durch Zahneingriff kommt). Dies wird nachfolgend anhand der Figuren 1 bis 14 näher erläutert.

Figur 1a zeigt eine erfindungsgemäße Verriegelungseinrichtung 1 mit einem ersten Bauteil 22 und einem zweiten Bauteil 23, die in Längsrichtung (Pfeile A1, A2) relativ zueinander verstellbar sind. Das erste und zweite Bauteil 22, 23 entspricht hierbei beispielsweise dem ersten und zweiten Teilstück 11, 12 bzw. dem zweiten und dritten Teilstück 12, 13, insbesondere im Bereich der Schrägflächen 11', 12', 13', 14'. Das zweite Bauteil 23 ist mit einer asymmetrischen Verzahnung 24 mit einseitig rampenartig ausgebildeten Zähnen 25 ausgestattet. Am ersten Bauteil 22 ist ein komplementär ausgeformter (und beispielsweise dem Blockierstift 31 entsprechenden) Riegel 6 mit Zähnen 7 vorgesehen, die in verschiedenen Relativstellungen formschlüssig in die Verzahnung 24 einsetzbar sind und relativ hohe Sperrkräfte bewirken (formschlüssiges Sperrmittel 8). Zusätzlich weist die Verriegelungseinrichtung 1 ein vorwiegend reibschlüssig wirkendes Sperrmittel 9 auf, welches aus einer am ersten Bauteil 22 angeordneten Blattfeder 10 und einem im Wesentlichen glatten Reibklotz 110 besteht, welcher auf der Verzahnung 24 aufliegt. Der Reibklotz 110 kann zum Lösen der Verriegelung manuell von der Verzahnung 24 abgehoben werden. Das erste Bauteil 22 ist ferner gegenüber dem zweiten Bauteil 23 nicht nur querschieblich (Pfeile A 1 , A2), sondern auch gegen die Kraftrichtung der Blattfeder 10 in Richtung des Pfeils C' (d.h. entgegen der Verlagerungsrichtung C) auf das zweite Bauteil 23 zu verschiebbar gelagert.

Die Wirkungsweise ist nun die Folgende: Beim Verschieben des ersten Bauteils 22 relativ zum zweiten Bauteil 23 in Richtung des Pfeils A2 gleitet der Reibklotz 110 weitgehend geräuschlos über die Rampen der Zähne 25 und übt nur einen geringen, fast ausschließlich reibschlüssigen Widerstand gegen die Verstellung aus. Bei einer Verstellung in Richtung des Pfeils A1 ist der Widerstand aufgrund der asymmetrischen Zahnform der Verzahnung 24 deutlich erhöht. Eine so gerichtete Verstellung erfordert üblicherweise ein Lösen der Verriegelung durch Abheben des Reibklotzes 110 von der Verzahnung 25. Das reibschlüssige Sperrmittel 9 ist geeignet, ein ungewolltes Verstellen insbesondere in Richtung des Pfeils A1 unter Grundlast (d.h. einer vergleichsweise geringen Kraftwirkung entgegen der Verlagerungsrichtung C) oder auch einer geringen zusätzlichen Betriebslast, insbesondere vibrierenden Lasten, zu verhindern.

Bei einer erhöhten Betriebslast wird das erste Bauteil 22 infolge einer entsprechenden Lastrichtung oder unter Verwendung von Lastumlenkmitteln in Richtung des Pfeils C' auf das zweite Bauteil 23 zu bewegt, wobei sich die Blattfeder 10 elastisch kompressibel verformt (Figur 1 b). Hierdurch gelangt der Riegel 6 in Eingriff mit der Verzahnung 24 und sperrt die Bewegung formschlüssig, wobei die Wirkung in Richtung des Pfeils A1 besonders groß ist. Beim Abklingen der erhöhten Betriebslast hebt die Blattfeder 10 den Riegel 7 wieder ab und stellt das System in den Zustand nach Figur 1 a zurück.

Die Verzahnung 24 kann naturgemäß auch Zähne mit symmetrischem Dreiecksprofil (vergleiche Figur 2), rechteckförmigen Zähnen (vergleiche Figur 3) oder anderen Zahnformen aufweisen.

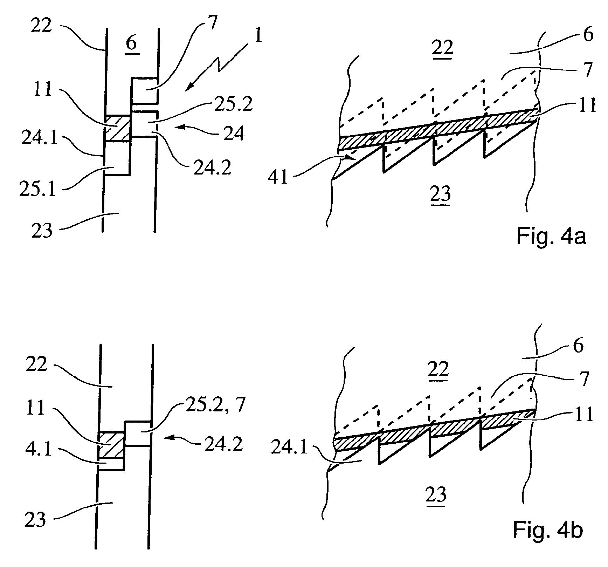

Bei der Ausführung nach Figur 4a (seitliche Ansicht und Querschnitt) sind zwei helixartige Verzahnungen 24.1, 24.2 nebeneinander, jedoch zueinander höhenversetzt vorgesehen. Der Riegel 6 weist eine entsprechende Gegenkontur auf, wobei der bereits elastisch-kompressible Reibklotz 110 bereits unter Grundlast auf die Verzahnung 24.1 wirkt und die Zähne 7 des Riegels 6 in Überdeckung mit der Verzahnung 24.2, aber hierzu beanstandet, stehen.

Bei einer erhöhten Betriebslast (Figur 4b) wird der Reibklotz 110 in die Verzahnung 24.1 eingepresst und entfaltet dort bereits eine gewisse formschlüssige Sperrwirkung. Insbesondere geraten jedoch die Zähne 7 des Riegels 6 in Formschluss mit der Verzahnung 24.2 und sichern die Lage der Bauteile 22 und 23 zueinander, insbesondere in Richtung des Pfeils A1.

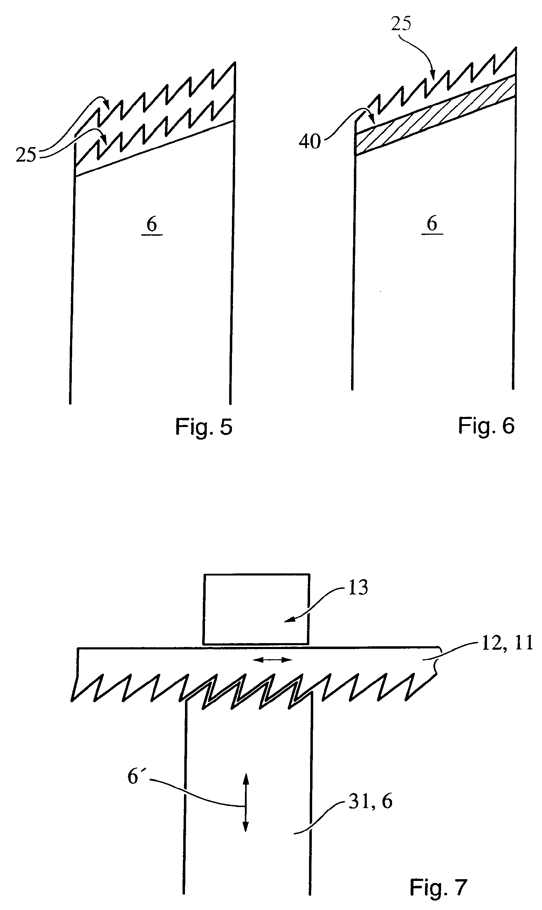

In Figur 5 ist ein weiteres Beispiel für eine Ausführungsform des Riegels 6 mit zwei Verzahnungen 25. In Figur 6 ist ein Beispiel für eine Ausführungsform des Riegels 6 mit einerseits einer Verzahnung 25 (als Blockiereinrichtung 30), die in eine entsprechende Verzahnung entweder des ersten Teilstücks 11 oder des zweiten Teilstücks 12 eingreifend eine Bewegung dieses Teilstücks 11, 12 zu verhindern in der Lage ist, und andererseits einer gummierten Fläche (als Gleitfläche bzw. als Gleiteinrichtung 40). Es kann erfindungsgemäß vorgesehen sein, dass entweder unterhalb der Gummierung eine Federeinrichtung als Metallfeder oder aber auch als ein federnder Schaum vorgesehen ist oder auch die Gummierung derart vorgesehen ist, dass bei einer ausreichend großen ersten Kraft auf das erste Teilstück 11 die Gummierung derart komprimiert wird, dass die Blockiereinrichtung 30 (d.h. die Verzahnungen) in Eingriff miteinander gebracht werden. Die Gegenseite der Gummierung kann ebenfalls eine Gummierung umfassen oder aber als Feder 41 ausgeführt sein, wie dies in den Figuren 13 und 14 dargestellt ist. Die Feder 41 stehe dabei in ständigem Kontakt zur Gleit- bzw. Reibfläche der Gegenseite.

Figur 7 zeigt eine herkömmliche Verriegelung der Bewegung des ersten Teilstücks 11 oder des zweiten Teilstücks 12 mittels eines Blockierstifts 31 bzw. Riegels 6 beispielsweise gegenüber dem dritten Teilstück 13, wie dies beispielsweise in der deutschen Patentanmeldung DE 10 2007 041 498.8 beschrieben wird. Der Riegel 6 ist entsprechend dem Pfeil 6' beweglich und gibt die Bewegung entweder frei (Verzahnung außer Eingriff) oder nicht (Verzahnung im Eingriff, in Figur 7 dargestellt).

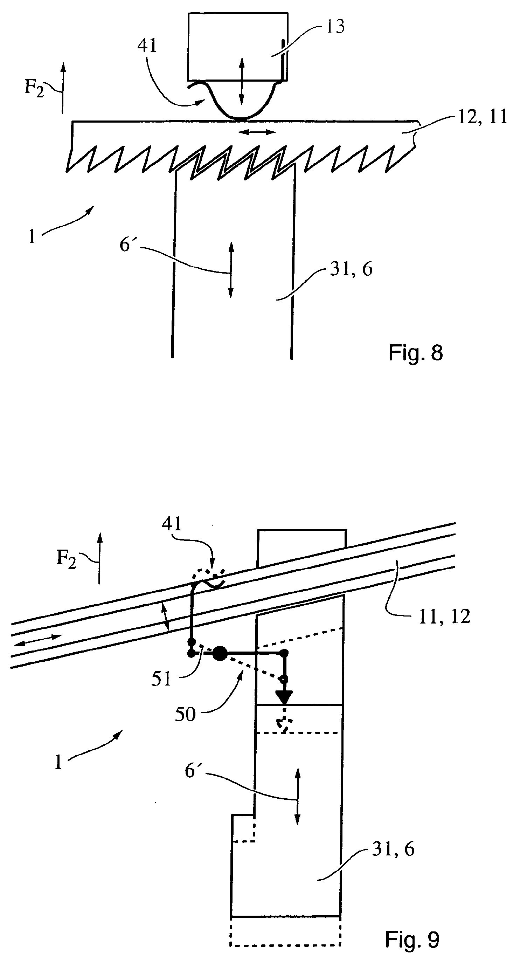

In der Darstellung gemäß Figur 8 ist eine erfindungsgemäße Ausführungsform der Verriegelungseinrichtung dargestellt, bei der eine Feder 41 der Gleiteinrichtung 40 zwischen dem dritten Teilstück 13 und dem ersten Teilstücks 11 oder dem zweiten Teilstück 12 der Blockiereinrichtung 30 (in Form der in Eingriff befindlichen Verzahnungen) in axialer Richtung (d.h. im wesentlichen parallel zur Verschieberichtung) gegenüberliegend angeordnet ist. Wenn eine zweite Kraft F2 auf das erste Teilstück 11 (bzw. das zweite Teilstück 12) parallel zur Verlagerungsrichtung und gegen die Wirkung der Feder 41 ausgeübt wird, kommen die Verzahnungen außer Eingriff und es kann (geräuschlos oder zumindest im wesentlichen geräuschlos) eine Verstellung bewirkt werden.

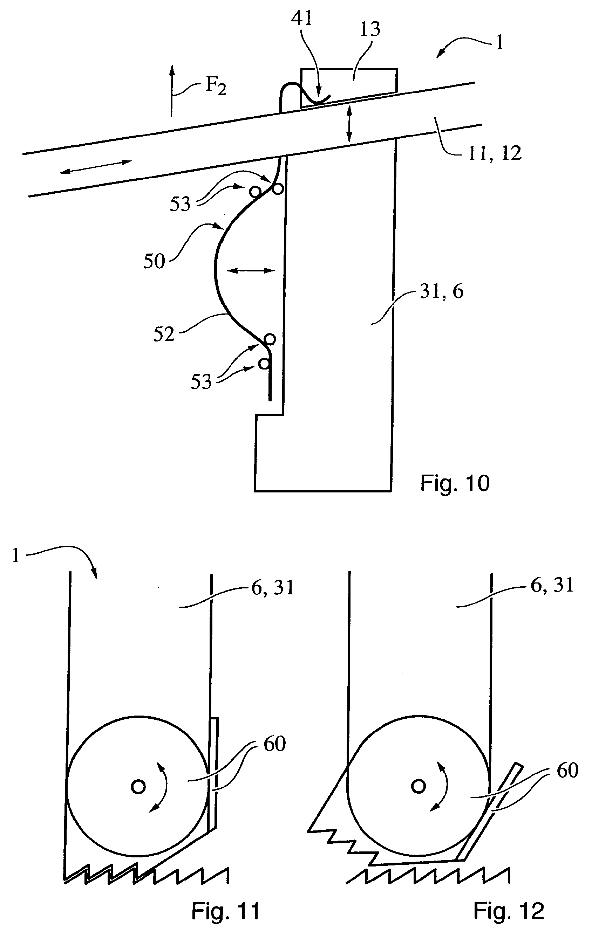

In den Figuren 9 und 10 sind Abwandlungen der erfindungsgemäßen Verriegelungseinrichtung gemäß der Figur 8 dargestellt, wobei zusätzlich zu der Federwirkung der Feder 41 mittels einer Übertragungseinrichtung 50 eine Relativbewegung im Sinne einer Entriegelung bzw. eines Zurückziehens des Riegels bzw. des Blockierstifts 31 bewirkt wird. Die Übertragungseinrichtung 50 ist gemäß der Ausführungsform gemäß der Figur 9 als ein Hebel 51 bzw. eine Hebeleinrichtung 51 ausgebildet, wobei die auf das erste Teilstück 11 (bzw. auf das zweite Teilstück 12) ausgeübte zweite Kraft F2 zu einer entriegelnden Bewegung (bzw. Zurückziehen) des Riegels 6 führt. Die Übertragungseinrichtung 50 ist gemäß der Ausführungsform gemäß der Figur 10 als eine Federeinrichtung 52 ausgebildet, wobei mittels Widerlager 53 im Zusammenspiel mit der Federeinrichtung 52 wiederum die auf das erste Teilstück 11 (bzw. auf das zweite Teilstück 12) ausgeübte zweite Kraft F2 zu einer entriegelnden Bewegung (bzw. Zurückziehen) des Riegels 6 führt.

In den Figuren 11 und 12 ist eine weitere alternative Ausführungsform der erfindungsgemäßen Verriegelungseinrichtung 1 dargestellt, wobei die Blockiereinrichtung 30 und die Gleiteinrichtung 40 mittels eines schwenkbaren Zahnsegments 60 realisiert sind. Dieses schwenkbare Zahnsegement 60 ist beispielsweise am Riegel 6 angeordnet und weist eine in Figur 11 dargestellte Blockierstellung und eine in Figur 12 dargestellte Gleitstellung auf. Erfindungsgemäß ist es bei dieser Ausführungsform bevorzugt vorgesehen, dass ein Federmittel (nicht dargestellt) das schwenkbare Zahnsegment 60 in seine Blockierstellung vorspannt.

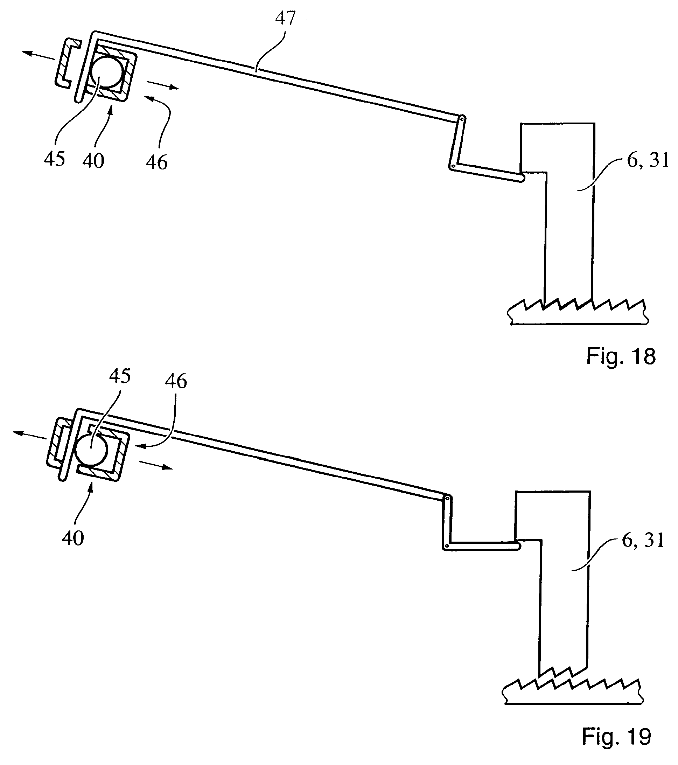

In den Figuren 18 und 19 sind weitere Abwandlungen der erfindungsgemäßen Verriegelungseinrichtung 1 dargestellt. Hierbei ist die Gleiteinrichtung 40 gleichzeitig als Steuereinrichtung zur Steuerung der Bewegung des Riegels 6 bzw. des Blocierstifts 31 vorgesehen. Die Gleiteinrichtung 40 weist beispielsweise eine in einem Käfig 46 gelagerte Kugel 45 zwischen dem zweiten Teilstück 12 und dem dritten Teilstück 13 auf. Bei einer Relativbewegung zwischen dem zweiten Teilstück 12 und dem dritten Teilstück 13 kommt es zu einer Bewegung der Kugel 45 in dem Käfig 46. Diese Bewegung bewirkt mittels eines Hebelmechanismus 47 eine Entriegelungsbewegung bzw. ein Rückziehen des Riegels 6. Die Anordnung der Kugel 45 zwischen dem zweiten Teilstück 12 und dem dritten Teilstück 13 ist bevorzugt auf einer radial außenliegenden Seite des zweiten Teilstücks 12 vorgesehen.

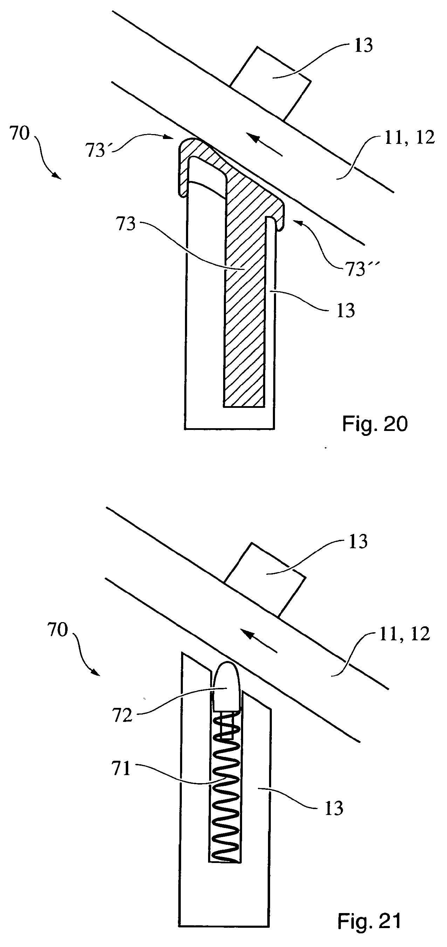

In der Darstellung gemäß den Figuren 20 und 21 ist dargestellt, wie zwischen dem dritten Teilstück 13 und dem ersten Teilstücks 11 oder zwischen dem dritten Teilstück 13 und dem zweiten Teilstück 12 in axialer Richtung (d.h. im wesentlichen parallel zur Verschieberichtung gegenüberliegend angeordnet) eine Gleiteinrichtung im Sinne eines Toleranzausgleichs bzw. eine Toleranzausgleichseinrichtung 70 realisierbar ist. Gemäß Figur 21 ist die Toleranzausgleichseinrichtung 70 derart aufgebaut, dass zwischen sich gegenüberliegenden Teilen des einen Teilstücks - im Beispiel der Figur 21 des dritten Teilstücks 13 - ein anderes Teilstück - im Beispiel der Figur 21 das erste bzw. zweite Teilstück 11, 12 - geführt ist und dass in einem der gegenüberliegenden Teile des einen Teilstücks (hier mit 13 bezeichnet) ein Toleranzfederelement 71 und ein Toleranzgleitelement 72 angeordnet ist, so dass mittels des Toleranzfederelements 71 das Toleranzgleitelement 72 gegen das andere Teilstück (hier mit 11, 12 bezeichnet) gedrückt und damit unter Ausgleich von Toleranzen geführt wird. Eine alternative Ausführungsform einer solchen Toleranzausgleichseinrichtung 70 zwischen dem dritten Teilstück 13 und dem ersten Teilstücks 11 oder zwischen dem dritten Teilstück 13 und dem zweiten Teilstück 12 ist in Figur 20 dargestellt. Gemäß Figur 20 ist die Toleranzausgleichseinrichtung 70 derart aufgebaut, dass zwischen sich gegenüberliegenden Teilen des einen Teilstücks - im Beispiel der Figur 20 des dritten Teilstücks 13 - ein anderes Teilstück - im Beispiel der Figur 20 das erste bzw. zweite Teilstück 11, 12 - geführt ist und dass in einem der gegenüberliegenden Teile des einen Teilstücks (hier mit 13 bezeichnet) ein weiteres Toleranzfederelement 73 angeordnet ist, so dass das weitere Toleranzfederelement 73 gegen das andere Teilstück (hier mit 11, 12 bezeichnet) drückt und damit unter Ausgleich von Bauteiltoleranzen geführt wird. Das weitere Toleranzfederelement 73 weist einen Federanteil 73' und einen Anschlagsanteil 73" auf. Der Federanteil 73' dient dem Toleranzausgleich und ist derart dimensioniert, dass ein Andrücken an das jeweils andere Teilstück (hier 11, 12) erfolgt. Der Anschlagsteil 73" dient einer Geräuschminimierung für den Fall, dass eines der Teilstücke 11, 12, 13 bei einer Einstellung der Extremposition an den Enden des Komforteinstellungsbereichs (bzw. an den Enden des Verlagerungswegs der Komforteinstellung) an ein anderes Teilstück anschlägt. Das weitere Toleranzfederelement 73 ist durchgängig aus einem Material hergestellt, welches elastisch genug ist, um in einem solchen Fall eine Geräuschminimierung herbeizuführund, so dass ein Anschlagen von "harten" Partien der Teilstücke 11, 12, 13 aneinander und die damit einhergehende Geräuschentwicklung vermieden wird.

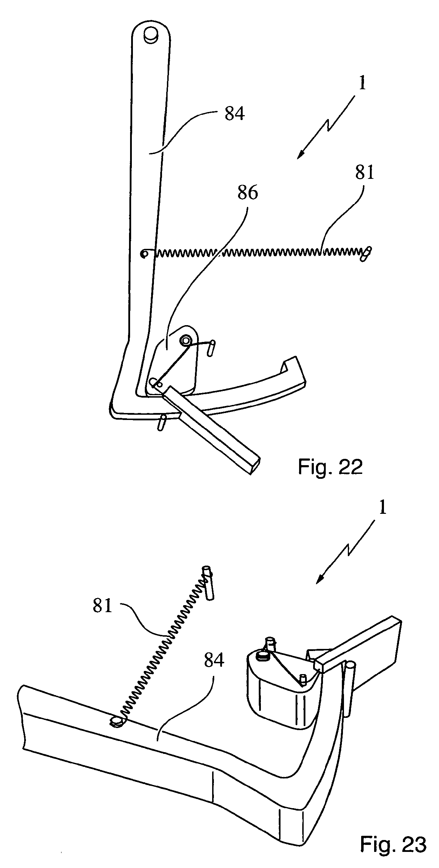

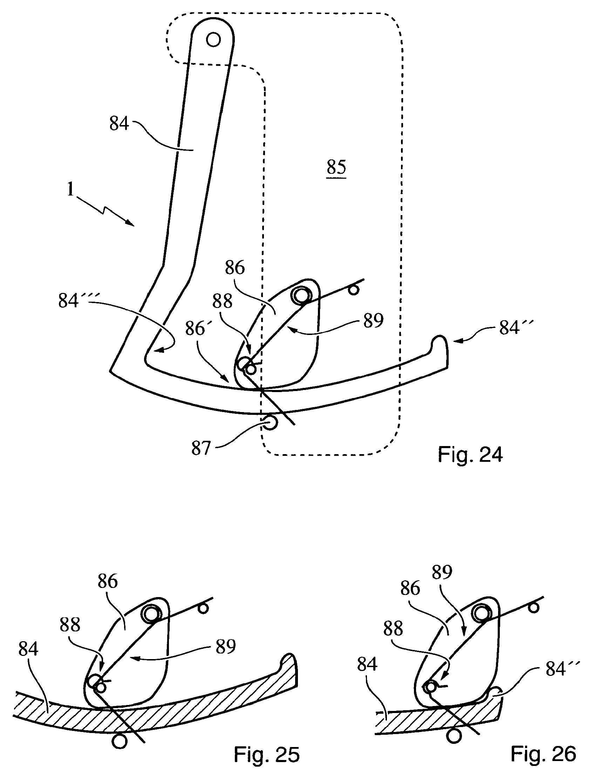

Die Figuren 22 bis 26 zeigen in unterschiedlichen perspektivischen Darstellungen bzw. Seitendarstellungen eine alternative Möglichkeit einer Komforteinstellung einer crashaktiven Kopfstütze. Die Figuren 22 bis 26 werden im Folgenden gemeinsam beschrieben. Eine solche crashaktive Kopfstütze 4 weist ein fünftes Teilstück 85 und ein viertes Teilstück 84 auf (vgl. insbesondere Figur 24). Das fünfte Teilstück 85 ist normalerweise, d.h. bei normalem Betrieb der Kopfstütze, in einer Normalstellung eingestellt. In einer Unfallsituation kann das fünfte Teilstück 85 (relativ beispielsweise zu einem in Figur 24 nicht dargestellten weiteren Teilstück bzw. relativ zum restlichen Teil der Kopfstütze) in Richtung zum Kopf des Sitzinsassen hin bewegt werden. Vor dem fünften Teilstück 85 (d.h. in Richtung zum Kopf des Sitzinsassen vor dem fünften Teilstück) ist ein viertes Teilstück 84 angeordnet, welches relativ zum fünften Teilstück 85 zu Komfortzwecken bewegbar ist. Die Bewegung des vierten Teilstücks 84 relativ zum fünften Teilstück 85 ist möglich zwischen einer Ausgangsstellung und einer Endstellung und ist als Schwenkbewegung um eine weitere Drehachse 84' vorgesehen. Hierbei entspricht die Ausgangsstellung der am weitesten vom Kopf des Sitzinsassen entfernte Einstellung und es entspricht die Endstellung der weitesten Einstellung des vierten Teilstücks 84 in Richtung zum Kopf des Sitzinsassen hin. Gemäß der Ausführungsform der Verriegelungseinrichtung 1 nach den Figuren 22 bis 26 ist es nun vorgesehen, dass die Relativeinstellung des vierten Teilstücks 84 relativ zum fünften Teilstück 85 zwischen der Ausgangsstellung und der Endstellung in jeder beliebigen Einstellung bzw. Position möglich ist. Dies wird durch ein Klemmelement 86 realisiert, welches in einem Kontaktbereich 86' (vgl. Figur 24) reibschlüssig mit dem vierten Teilstück 84 in Kontakt steht und das vierte Teilstück 84 gegen ein Gegenelement 87 drückt. Eine Kraftbeaufschlagung des vierten Teilstücks 84 in Richtung auf die Ausgangsstellung hin (in Figur 24 nach rechts, d.h. in Gegenuhrzeigerrichtung um die weitere Drehachse 84') führt aufgrund eines im oberen rechten Teil des Klemmelements vorgesehenen Drehpunkt zu einer größeren Andrückkraft im Kontaktbereich und damit zu einer Arretierung des vierten Teilstücks 84 gegenüber einer Bewegung in Richtung auf die Ausgangsstellung hin. Ein Federelement 81 (vgl. insbesondere Figuren 22 und 23) beaufschlagt das vierte Teilstück 84 in Richtung auf die Ausgangsstellung hin. Ferner beaufschlagt ein weiteres Federelement 89 das Klemmelement 86 derart (in Figur 24 nach rechts, d.h. in Gegenuhrzeigerrichtung um den im oberen rechten Teil des Klemmelements angedeuteten, jedoch nicht mit einem Bezugszeichen versehenen Drehpunkt des Klemmelements 86), dass im Normalfall ein Andrücken bzw. ein reibschlüssiger Kontakt zum vierten Teilstück 84 vorliegt. In diesem Fall ist das Klemmelement 86 in einer Klemmposition eingestellt. Zum Zurückstellen des vierten Teilstücks 84 ist es vorgesehen, dass das Klemmelement 86 in eine Rückstellposition einstellbar ist (vgl. Figur 26). Die Einstellung der Rückstellposition erfolgt beispielsweise mittels einer Haltefeder 88, die ein im Wesentlichen C-förmig gebogenes Ende aufweist, mittels welchem beispielsweise ein Bolzen des Klemmelements 86 teilweise umgriffen werden kann, so dass das Klemmelement 86 (gegen die Kraftwirkung des weiteren Federelements 89 und im Kontaktbereich 86' mit Abstand zum vierten Teilstück 84) gehalten wird. Die Einstellung der Rückstellposition (ausgehend von der Klemmposition) erfolgt im dargestellten Ausführungsbeispiel dadurch, dass ein erstes Anschlagelement 84" des vierten Teilstücks 84 das Klemmelement 86 (in Figur 24 im Uhrzeigersinn) bewegt. Die Einstellung der Klemmposition (ausgehend von der Rückstellposition) erfolgt im dargestellten Ausführungsbeispiel dadurch, dass ein zweites Anschlagelement 84'" des vierten Teilstücks 84 das Klemmelement 86 (in Figur 24 in Gegenuhrzeigerrichtung) bewegt.

### Bezugszeichenliste

- 1: Verriegelungseinrichtung
- 2: Sitzteil
- 3: Rückenlehne
- 4: Kopfstütze
- 5: Haltestange
- 6: Riegel
- 6': Bewegung des Riegels bzw. Blockierstifts
- 7: Zahn (des Riegels)
- 8: Sperrmittel (formschlüssig)
- 9: Sperrmittel (reibschlüssig)
- 10: Blattfeder
- 11: erstes Teilstück der Kopfstütze
- 11': erste Schrägfläche
- 12: zweites Teilstück der Kopfstütze
- 12': zweite Schrägfläche
- 13: drittes Teilstück der Kopfstütze
- 13': dritte Schrägfläche
- 14': vierte Schrägfläche
- 19: Drehachse
- 22, 23: Bauteil
- 24, 24.1, 24.2: Verzahnung
- 25, 25.1, 25.2: Zahn (der Verzahnung)
- 30: Blockiereinrichtung
- 31: Blockierstift
- 40: Gleiteinrichtung
- 41: Feder
- 45: Kugel
- 46: Käfig
- 47: Hebelmechanismus
- 50: Übertragungseinrichtung
- 51: Hebeleinrichtung
- 52: Federeinrichtung
- 53: Widerlager
- 60: schwenkbares Zahnsegment
- 70: Toleranzausgleichseinrichtung
- 71: Toleranzfederelement
- 72: Toleranzgleitelement
- 73: weiteres Toleranzfederelement
- 81: Federelement
- 84: viertes Teilstück
- 84': weitere Drehachse
- 84": erstes Anschlagelement
- 84'": zweites Anschlagelement
- 85: fünftes Teilstück
- 86: Klemmelement
- 86': Kontaktbereich
- 87: Gegenelement
- 88: Haltefeder
- 89: weiteres Federelement
- 110: Reibklotz
- 122: Komfortteilstück
- 123: Sicherheitsteilstück
- C: Verschiebung- / Verlagerungsrichtung des Polsterkörpers
- F1: erste Kraft
- F2: zweite Kraft

## Patentansprüche

1. Verriegelungseinrichtung (1), insbesondere für eine Kopfstütze (4) für einen Fahrzeugsitz, mit einem ersten Teilstück (11), welches aus einer Gebrauchsstellung entlang einer Verlagerungsrichtung (C) in eine Komfortstellung verlagerbar ist, wobei eine Relativbewegung eines zweiten Teilstücks (12) gegenüber dem ersten Teilstück (11) und/oder gegenüber einem dritten Teilstück (13) um eine zur Verlagerungsrichtung (C) im wesentlichen parallele Drehachse (19) vorgesehen ist, wobei zwischen dem ersten Teilstück (11) und dem zweiten Teilstück (12) und/oder zwischen dem zweiten Teilstück (12) und dem dritten Teilstück (13) sowohl eine Blockiereinrichtung (30) als auch eine Gleiteinrichtung (40) angeordnet ist, **dadurch gekennzeichnet, dass** die Blockiereinrichtung (30) zur Blockierung einer Bewegung des ersten Teilstücks (11) entgegen der Verlagerungsrichtung (C) vorgesehen ist, wobei die Blockiereinrichtung (30) eine Verzahnung im Bereich einer ersten Schrägfläche (11') des ersten Teilstücks (11) und einer zweiten Schrägfläche (12') des zweiten Teilstücks (12) und/oder eine Verzahnung im Bereich einer dritten Schrägfläche (13') des dritten Teilstücks (13) und einer vierten Schrägfläche (14') des zweiten Teilstücks (12) aufweist, wobei die Blockiereinrichtung (30) wenigstens einen Blockierstift (31) aufweist, wobei der Blockierstift (31) im Normalfall federvorbelastet vorgesehen ist, wobei der Blockierstift (31) Zähne (7) aufweist, die formschlüssig in die Verzahnung einsetzbar sind, wobei ..--..im Zustand ohne benutzerseitige Kraftwirkung auf das erste Teilstück (11) lediglich die Wirkung der Gleiteinrichtung (40) vorgesehen ist, wobei der Blockierstift (31) im Normalfall nicht im Zahneingriff, sondern lediglich im Reibschluss mit der vierten Schrägfläche (14') vorgesehen ist, wobei die Verriegelungseinrichtung (1) eine Feder (41) aufweist, wobei die Feder (41) dazu ausgebildet ist, mittels einer Übertragungseinrichtung (50) die Relativbewegung im Sinne einer Entriegelung des Blockierstifts (31) zu bewirken, wobei eine Kraftschwelle vorgesehen ist und wobei bei Ausübung einer auf das erste Teilstück (11) entgegen der Verlagerungsrichtung (C) wirkenden ersten Kraft (F1) oberhalb der Kraftschwelle die Wirkung der Blockiereinrichtung (30) vorgesehen ist, wobei es bei einer über der Kraftschwelle liegenden ersten Kraft (F1) auf das erste Teilstück (11) in eine Richtung entgegen der Verlagerungsrichtung (C) die Verzahnungen der Blockiereinrichtung (30) durch Zahneingriff blockiert vorgesehen sind, oder ..--.. im Zustand ohne benutzerseitige Kraftwirkung auf das erste Teilstück (11) mindestens die Wirkung der Blockiereinrichtung vorgesehen ist, wobei die Verriegelungseinrichtung (1) eine Feder (41) derart aufweist, dass eine Kraftschwelle vorgesehen ist und dass bei Ausübung einer auf das erste Teilstück (11) parallel zur Verlagerungsrichtung (C) wirkenden zweiten Kraft (F2) oberhalb der Kraftschwelle die Wirkung der Blockiereinrichtung (30) aufgehoben vorgesehen ist, wobei bei Ausübung einer auf das erste Teilstück (11) parallel zur Verlagerungsrichtung (C) wirkenden zweiten Kraft (F2) oberhalb der Kraftschwelle der Blockierstift (31) betätigt vorgesehen ist.

2. Verriegelungseinrichtung (1) nach Anspruch 1, **dadurch gekennzeichnet, dass** die ersten und/oder zweiten Schrägflächen (11', 12') im wesentlichen helixförmig um die Drehachse (19) verlaufen und bei einer Relativbewegung des zweiten Teilstücks (12) um die Drehachse (19) eine Bewegung des ersten Teilstücks (11) entlang der Verlagerungsrichtung (C) bewirken.

3. Verriegelungseinrichtung (1) nach einem der vorhergehenden Ansprüche, **dadurch gekennzeichnet, dass** das zweite Teilstück (12) zwischen dem ersten Teilstück (11) und einem dritten Teilstück (13) angeordnet vorgesehen ist, wobei die dritten und/oder vierten Schrägflächen (13', 14') im wesentlichen helixförmig um die Drehachse (19) verlaufen und bei einer Relativbewegung des zweiten Teilstücks (12) um die Drehachse (19) eine Bewegung des zweiten Teilstücks (12) entlang der Verlagerungsrichtung (C) bewirken.

4. Verriegelungseinrichtung (1) nach einem der vorhergehenden Ansprüche, **dadurch gekennzeichnet, dass** die Blockiereinrichtung (30) und die Gleiteinrichtung (40) entlang der ersten Schrägfläche (11') und/oder entlang der zweiten Schrägfläche (12') und/oder entlang der dritten Schrägfläche (13') und/oder entlang der vierten Schrägfläche (14') im Wesentlichen nebeneinander verlaufend vorgesehen sind, insbesondere entlang eines Umfangs um die Drehachse (19) nebeneinander verlaufend vorgesehen sind und insbesondere in bezüglich der Drehachse (19) axialer Richtung versetzt vorgesehen sind.

5. Verriegelungseinrichtung (1) nach einem der vorhergehenden Ansprüche, **dadurch gekennzeichnet, dass** die Feder (41) im Bereich der ersten Schrägfläche (11') und/oder im Bereich der zweiten Schrägfläche (12') und/oder im Bereich der dritten Schrägfläche (13') und/oder im Bereich der vierten Schrägfläche (14') auf der der Blockiereinrichtung (30) in axialer Richtung gegenüberliegenden Seite vorgesehen ist.

6. Verriegelungseinrichtung (1) nach einem der vorhergehenden Ansprüche, **dadurch gekennzeichnet, dass** das erste Teilstück (11) unfallbedingt aus der Gebrauchsstellung entlang der Verlagerungsrichtung (C) in eine Sicherheitsstellung verlagerbar ist.

7. Verriegelungseinrichtung (1) nach einem der vorhergehenden Ansprüche, **dadurch gekennzeichnet, dass** das zweite Teilstück (12) ein Komfortteilstück (122) und ein Sicherheitsteilstück (123) aufweist, wobei das Komfortteilstück (122) zur Komfortverstellung ausgehend von einer der Gebrauchsstellung des ersten Teilstücks (11) entsprechenden Position von der Position des Sicherheitsteilstücks (123) entfernbar ist, wobei insbesondere das Komfortteilstück (122) zur Komfortverstellung bis in eine der Sicherheitsstellung des ersten Teilstücks (11) entsprechenden Position unabhängig von der Position des Sicherheitsteilstücks (123) verstellbar ist.

8. Verriegelungseinrichtung (1) nach einem der vorhergehenden Ansprüche, **dadurch gekennzeichnet, dass** zwischen dem ersten Teilstück (11) und dem zweiten Teilstück (12) und/oder zwischen dem zweiten Teilstück (12) und dem dritten Teilstück (13) und/oder zwischen dem ersten Teilstück (11) und dem dritten Teilstück (13) eine Toleranzausgleichseinrichtung (70) vorgesehen ist.

## Claims

1. Locking device (1), in particular for a head restraint (4) for a vehicle seat, comprising a first sub-piece (11), which is displaceable from a use position along a displacement direction (C) into a comfort position, a relative movement of a second sub-piece (12) with respect to the first sub-piece (11) and/or with respect to a third sub-piece (13) about an axis of rotation (19) substantially parallel to the displacement direction (C) being provided, both a blocking device (30) and a sliding device (40) being arranged between the first sub-piece (11) and the second sub-piece (12) and/or between the second sub-piece (12) and the third sub-piece (13), **characterised in that** the blocking device (30) is provided for blocking a movement of the first sub-piece (11) counter to the displacement direction (C), the blocking device (30) comprising a toothing in the region of a first oblique face (11') of the first sub-piece (11) and a second oblique face (12') of the second sub-piece (12) and/or a toothing in the region of a third oblique face (13') of the third sub-piece (13) and a fourth oblique face (14') of the second sub-piece (12), the blocking device (30) comprising at least one blocking pin (31), the blocking pin (31) being spring-biased in the normal situation, the blocking pin (31) comprising teeth (7) which can be positively inserted into the toothing,
- merely the effect of the sliding device (40) being provided in the state without force exertion on the first sub-piece (11) by the user, the blocking pin (31) being merely in frictional engagement with the fourth oblique face (14') rather than in tooth engagement in the normal situation, the locking device (1) comprising a spring (41), the spring (41) being formed so as to bring about, by means of a transmission device (50), the relative movement to the effect of unlocking the blocking pin (31), a force threshold being provided, and the effect of the blocking device (30) being provided when a first force (F1) above the force threshold and acting on the first sub-piece (11) counter to the displacement direction (C) is exerted, the toothings of the blocking device (30) being blocked by tooth engagement in the event of a first force (F1) above the force threshold on the first sub-piece (11) in a direction counter to the displacement direction (C), or
- at least the effect of the blocking device being provided in the state without force exertion on the first sub-piece (11) by the user, the locking device (1) comprising a spring (41) in such a way that a force threshold is provided and that, when a second force (F2) above the force threshold and acting on the first sub-piece (11) parallel to the displacement direction (C) is exerted, the effect of the blocking device (30) is suspended, the blocking pin (31) being actuated when a second force (F2) above the threshold and acting on the first sub-piece (11) parallel to the displacement direction (C) is exerted.

2. Locking device (1) according to claim 1, **characterised in that** the first and/or second oblique faces (11', 12') extend substantially helically around the axis of rotation (19) and bring about a movement of the first sub-piece (11) along the displacement direction (C) in the event of a relative movement of the second sub-piece (12) about the axis of rotation (19).

3. Locking device (1) according to either of the preceding claims, **characterised in that** the second sub-piece (12) is arranged between the first sub-piece (11) and a third sub-piece (13), the third and/or fourth oblique faces (13', 14') extending substantially helically around the axis of rotation (19) and bringing about a movement of the second sub-piece (12) along the displacement direction (C) in the event of a relative movement of the second sub-piece (12) about the axis of rotation (19).

4. Locking device (1) according to any of the preceding claims, **characterised in that** the blocking device (30) and the sliding device (40) extend substantially side by side along the first oblique face (11') and/or along the second oblique face (12') and/or along the third oblique face (13') and/or along the fourth oblique face (14'), in particular extending side by side along a circumference around the axis of rotation (19) and in particular being offset in an axial direction with respect to the axis of rotation (19).

5. Locking device (1) according to any of the preceding claims, **characterised in that** the spring (41) is provided in the region of the first oblique face (11') and/or in the region of the second oblique face (12') and/or in the region of the third oblique face (13') and/or in the region of the fourth oblique face (14'), on the side opposing the blocking device (30) in the axial direction.

6. Locking device (1) according to any of the preceding claims, **characterised in that** in the event of an accident the first sub-piece (11) is displaceable from the use position along the displacement direction (C) into a safety position.

7. Locking device (1) according to any of the preceding claims, **characterised in that** the second sub-piece (12) comprises a comfort sub-piece (122) and a safety sub-piece (123), the comfort sub-piece (122) being removable, for comfort adjustment, from a position corresponding to the use position of the first sub-piece (11), of the position of the safety sub-piece (123), the comfort sub-piece (122) in particular being adjustable, for comfort adjustment, into a position corresponding to the safety position of the first sub-piece (11), independently of the position of the safety sub-piece (123).

8. Locking device (1) according to any of the preceding claims, **characterised in that** a tolerance compensation device (70) is provided between the first sub-piece (11) and the second sub-piece (12) and/or between the second sub-piece (12) and the third sub-piece (13) and/or between the first sub-piece (11) and the third sub-piece (13).

## Revendications

1. Dispositif de verrouillage (1), en particulier pour un appuie-tête (4) pour un siège de véhicule, comportant un premier segment (11) qui peut être déplacé d'une position d'utilisation le long d'une direction de déplacement (C) jusque dans une position de confort, dans lequel un mouvement relatif d'un deuxième segment (12) est prévu, par rapport au premier segment (11) et/ou par rapport à un troisième segment (13), autour d'un axe de rotation (19) sensiblement parallèle à la direction de déplacement (C), dans lequel un moyen de blocage (30) et un moyen de coulissement (40) sont disposés tous les deux entre le premier segment (11) et le deuxième segment (12) et/ou entre le deuxième segment (12) et le troisième segment (13), **caractérisé en ce que** le moyen de blocage (30) est prévu pour bloquer un mouvement du premier segment (11) contre la direction de déplacement (C), le moyen de blocage (30) présentant une denture au niveau d'une première surface inclinée (11') du premier segment (11) et d'une deuxième surface inclinée (12') du deuxième segment (12) et/ou une denture au niveau d'une troisième surface inclinée (13') du troisième segment (13) et d'une quatrième surface inclinée (14') du deuxième segment (12), le moyen de blocage (30) présentant au moins une cheville de blocage (31), la cheville de blocage (31) étant prévue sollicitée par un ressort dans le cas normal, la cheville de blocage (31) présentant des dents (7) qui peuvent être insérées par complémentarité de forme dans la denture, dans lequel :
- dans l'état sans l'action d'une force côté utilisateur sur le premier segment (11), seule l'action du moyen de coulissement (40) est prévue, la cheville de blocage (31) étant, dans le cas normal, prévue non pas en engrènement des dents mais seulement en frottement avec la quatrième surface inclinée (14'), dans lequel le dispositif de verrouillage (1) présente un ressort (41), le ressort (41) étant conçu pour provoquer à l'aide d'un moyen de transmission (50) le mouvement relatif dans le sens d'un déverrouillage de la cheville de blocage (31), dans lequel un seuil de force est prévu et dans lequel l'action du moyen de blocage (30) est prévue lorsqu'une première force (F1) agissant sur le premier segment (11) contre la direction de déplacement (C) est exercée au-dessus du seuil de force et, lorsqu'une première force (F1) se trouvant au-dessus du seuil de force est appliquée sur le premier segment (11) dans une direction contre la direction de déplacement (C), les dentures du moyen de blocage (30) sont prévues bloquées par l'engrènement des dents, ou
- dans l'état sans l'action d'une force côté utilisateur sur le premier segment (11), au moins l'action du moyen de blocage est prévue, le dispositif de verrouillage (1) présentant un ressort (41) de telle sorte qu'un seuil de force est prévu et que, lorsqu'une seconde force (F2) agissant sur le premier segment (11) parallèlement à la direction de déplacement (C) est exercée au-dessus du seuil de force, l'action du moyen de blocage (30) est annulée et, lorsqu'une seconde force (F2) agissant sur le premier segment (11) parallèlement à la direction de déplacement (C) est exercée au-dessus du seuil de force, la cheville de blocage (31) est prévue actionnée.

2. Dispositif de verrouillage (1) selon la revendication 1, **caractérisé en ce que** les première et/ou deuxième surfaces inclinées (11', 12') s'étendent sensiblement en forme d'hélice autour de l'axe de rotation (19) et provoquent un mouvement du premier segment (11) le long de la direction de déplacement (C) lorsqu'un mouvement relatif du deuxième segment (12) est effectué autour de l'axe de rotation (19).

3. Dispositif de verrouillage (1) selon une des revendications précédentes, **caractérisé en ce que** le deuxième segment (12) est prévu disposé entre le premier segment (11) et un troisième segment (13), dans lequel les troisièmes et/ou quatrièmes surfaces inclinées (13', 14') s'étendent sensiblement en forme d'hélice autour de l'axe de rotation (19) et provoquent un mouvement du deuxième segment (12) le long de la direction de déplacement (C) lorsqu'un mouvement relatif du deuxième segment (12) est effectué autour de l'axe de rotation (19).

4. Dispositif de verrouillage (1) selon une des revendications précédentes, **caractérisé en ce que** le moyen de blocage (30) et le moyen de coulissement (40) sont prévus pour s'étendre sensiblement l'un à côté de l'autre le long de la première surface inclinée (11') et/ou le long de la deuxième surface inclinée (12') et/ou le long de la troisième surface inclinée (13') et/ou le long de la quatrième surface inclinée (14'), en particulier sont prévus pour s'étendre l'un à côté de l'autre le long d'une circonférence autour de l'axe de rotation (19) et sont prévus en particulier de manière décalée dans la direction axiale par rapport à l'axe de rotation (19).

5. Dispositif de verrouillage (1) selon une des revendications précédentes, **caractérisé en ce que** le ressort (41) est prévu, au niveau de la première surface inclinée (11') et/ou au niveau de la deuxième surface inclinée (12') et/ou au niveau de la troisième surface inclinée (13') et/ou au niveau de la quatrième surface inclinée (14'), sur le côté opposé au moyen de blocage (30) dans la direction axiale.

6. Dispositif de verrouillage (1) selon une des revendications précédentes, **caractérisé en ce que** le premier segment (11) peut, en cas d'accident, être déplacé de la position d'utilisation le long de la direction de déplacement (C) jusque dans une position de sécurité.

7. Dispositif de verrouillage (1) selon une des revendications précédentes, **caractérisé en ce que** le deuxième segment (12) présente un segment de confort (122) et un segment de sécurité (123), dans lequel le segment de confort (122) peut être éloigné de la position du segment de sécurité (123) vers le déplacement de confort à partir d'une position correspondant à la position d'utilisation du premier segment (11), et en particulier le segment de confort (122) peut être déplacé vers le déplacement de confort jusque dans une position correspondant à la position de sécurité du premier segment (11) indépendamment de la position du segment de sécurité (123).

8. Dispositif de verrouillage (1) selon une des revendications précédentes, **caractérisé en ce que**, entre le premier segment (11) et le deuxième segment (12) et/ou entre le deuxième segment (12) et le troisième segment (13) et/ou entre le premier segment (11) et le troisième segment (13), un moyen de compensation de tolérances (70) est prévu.
